# EUROPÄISCHE PATENTSCHRIFT

(11) **EP 1 012 930 B1**
(45) Veröffentlichungstag und Bekanntmachung des Hinweises auf die Patenterteilung: **20.02.2002**
(21) Anmeldenummer: 98951340.3
(22) Anmeldetag: 02.09.1998
(51) Int. Cl.: H01S 3/06, H01S 3/102

(54) **FASERVERSTÄRKEREINRICHTUNG FÜR EIN OPTISCHES SYSTEM**
FIBRE AMPLIFICATION DEVICE FOR AN OPTICAL SYSTEM
DISPOSITIF D'AMPLIFICATION A FIBRE POUR UN SYSTEME OPTIQUE

(30) Priorität: 11.09.1997 DE 19739831
(43) Veröffentlichungstag der Anmeldung: 28.06.2000
(73) Patentinhaber: Deutsche Telekom AG, 53113 Bonn (DE)
(72) Erfinder: HEITMANN, Walter, D-64401 Gro -Bieberau (DE)
(86) Internationale Anmeldenummer: EP9805549
(87) Internationale Veröffentlichungsnummer: WO9913542

(56) Entgegenhaltungen:
- US-A- 3 743 965
- PATENT ABSTRACTS OF JAPAN vol. 016, no. 445 (P-1422), 17. September 1992 -& JP 04 156431 A (FUJITSU LTD), 28. Mai 1992
- PATENT ABSTRACTS OF JAPAN vol. 018, no. 092 (P-1693), 15. Februar 1994 -& JP 05 297228 A (FUJITSU LTD), 12. November 1993

## Beschreibung

Die Erfindung betrifft eine Faserverstärkereinrichtung gemäß Oberbegriff des Anspruchs 1.

Faserverstärkereinrichtungen dieser Art sind allgemein bekannt. Das zentrale Element einer solchen Faserverstärkereinrichtung ist ein Lichtwellenleiter, dessen Kernmaterial mit Seltene Erde Ionen dotiert ist und der durchlaufende Lichtenergie durch induzierte Emission verstärkt. Die Anregung erfolgt durch optisches Pumpen, das heißt durch Einstrahlung von Laserlicht, dessen Wellenlänge kürzer ist als die des im Lichtwellenleiter übertragenen Lichts, das verstärkt werden soll. Eine derartige Faserverstärkereinrichtung ist aus der JP 04 156431 A (Patent Abstracts of Japan vol. 016, no. 445 (P-1422), 17.09.1992) bekannt. Weiterhin beschreibt diese JP 04 156431 A, daß in einem Magnetfeld einer Magnetvorrichtung zumindest ein Abschnitt der lichtverstärkenden Faser angeordnet ist. Um den Verstärkungsgrad zu erhöhen, wird das Magnetfeld in Abhängigkeit der Wellenlänge des Lichtsignals verändert.

Faserverstärkereinrichtungen (im folgenden kurz Faserverstärker genannt) haben sich in den letzten Jahren zu Schlüsselkomponenten der optischen Nachrichtentechnik entwickelt. Zunehmend finden sie jedoch auch in der Sensor- und in der Medizin-Technik Verwendung. Der wichtigste und technisch am weitesten entwickelte Faserverstärker ist der sogenannte EDFA (Erbium Doped Fiber Amplifier), bei dem das Kernmaterial der Faser mit Erbium dotiert ist. Der EDFA verstärkt im Bereich des Dämpfungsminimums des üblicherweise aus Quarzglas bestehenden Lichtwellenleiters, also etwa um 1550 nm. In diesem Bereich werden Kleinsignalverstärkungen von über 40 dB bei geringem Rauschen erreicht. Neben der Dotierung mit Erbium werden auch andere Seltene Erden eingesetzt, wie beispielsweise Praseodym. Darüber hinaus werden die lichtverstärkenden Fasern auch mehrfach dotiert, beispielsweise mit Erbium und Ytterbium.

Die bekannten Faserverstärker haben den Nachteil, daß hohe Verstärkungsfaktoren nur in einem begrenzten Wellenlängenbereich erreicht werden, der vom Kernmaterial (zum Beispiel Quarzglas oder Fluoridglas) und von den Dotierstoffen abhängt. Der Grund dafür, daß die Verstärkung nicht nur bei einer einzigen Wellenlänge, sondern innerhalb eines bestimmten Bereichs erfolgt, liegt in einer Verbreiterung der Energieniveaus der Seltene Erde Ionen bedingt durch die inneren Felder im Kernmaterial. Für übliche EDFA beträgt die optische Verstärkungsbandbreite 30 nm, während durch zusätzliche Dotierung mit Ytterbium dieser Wert auf 40 nm erhöht werden kann.

Der zunehmende Bedarf an Bandbreite hat in den letzten Jahren zur Entwicklung einer Übertragung mit mehreren Wellenlängen, der sogenannten WDM-Übertragung (Wavelength Division Multiplexing) geführt. Zur Zeit werden bei der dichten WDM-Übertragung Systeme mit bis zu 32 Wellenlängen eingesetzt. In Zukunft wird sich wegen des weiter steigenden Bedarfs an Bandbreite die Zahl der Übertragungswellenlängen noch weiter erhöhen. Da aus technologischen und wirtschaftlichen Gründen der Abstand der einzelnen Wellenlängen nicht wesentlich geringer als 1 nm vorgegeben werden kann, und die Gesamtzahl der Wellenlängen durch die Bandbreite des Faserverstärkers begrenzt ist, besteht ein großes wirtschaftliches Interesse, die optische Bandbreite des Faserverstärkers zu erhöhen.

Die Aufgabe der Erfindung besteht deshalb darin, eine Faserverstärkereinrichtung zu schaffen, die eine Verstärkung des übertragenen Lichts innerhalb einer großen optischen Bandbreite ermöglicht.

Diese Aufgabe wird durch eine Faserverstärkereinrichtung gelöst, die die Merkmale des Anspruchs 1 aufweist. Dadurch, daß zumindest ein Abschnitt der lichtverstärkenden, ein Wellenlängenmultiplex-Signal tragenden Faser einem Magnetfeld mit konstanter magnetischer Induktion ausgesetzt wird, spalten sich die Emissions-Absorptionslinien der Seltenen Erden im äußeren Magnetfeld in mehrere Linien auf, was als Zeeman-Effekt bezeichnet wird. Diese Aufspaltung der Linien entspricht einer Verbreiterung der Energieniveaus und damit auch einer Erweiterung der Verstärkungsbandbreite.

Besonders vorteilhaft ist es, die magnetische Induktion des Magnetfeldes größer als 0,1 Tesla vorzugsweise aber größer als 1 Tesla zu wählen.

In einer vorteilhaften Weiterbildung der Erfindung ist vorgesehen, daß eine Magnetvorrichtung zumindest zwei Magnete aufweist, wobei benachbarte Magnete gleich gepolt sind. Ist beispielsweise der Nordpol eines Magneten der Faser zugewandt, so ist auch der Nordpol des benachbarten Magneten der Faser zugewandt.

In einer bevorzugten Weiterbildung der Erfindung kann ebenfalls vorgesehen sein, daß eine Magnetvorrichtung zumindest zwei Magnete aufweist, wobei benachbarte Magnete unterschiedlich gepolt sind. Ist ein bestimmter Magnet mit seinem Südpol der Faser zugewandt, so ist ein benachbarter Magnet derselben Magnetvorrichtung mit seinem Nordpol der Faser zugewandt.

In einer vorteilhaften Weiterbildung der Erfindung sind die Magnete jeder Magnetvorrichtung in jeweils einer Ebene vorzugsweise auf dem Umfang eines Kreises angeordnet.

In einer vorteilhaften Weiterbildung der Erfindung sind die Ebenen, in denen die beiden Magnetvorrichtungen angeordnet sind, parallel und mit Abstand zueinander angeordnet, wobei sich jeweils unterschiedliche Pole gegenüberliegender Magnete der beiden Magnetvorrichtungen gegenüberstehen. Zwischen den sich gegenüberliegenden Magneten der beiden Ebenen ist ein Luftspalt vorhanden, in dem die lichtverstärkende Faser vorzugsweise spiralförmig verläuft. Die Enden gegenüberliegender Magnete liegen in einem Abstand von unter 0,3 mm zueinander.

In einer vorteilhaften Weiterbildung der Erfindung sind ein magnetisierter innerer Zylinder und ein magnetisierter äußerer Zylinder vorgesehen, die koaxial zueinander angeordnet sind und einen Spalt zwischen sich bilden. Innerhalb dieses Spalts verläuft die lichtverstärkende Faser. Vorzugsweise ist zumindest einer der beiden Zylinder aus Teilsegmenten aufgebaut.

In einer vorteilhaften Weiterbildung der Erfindung sind die der lichtverstärkenden Faser abgewandten Pole der Magnete mittels eines magnetisierbaren Materials miteinander verbunden, so daß die magnetische Induktion erhöht werden kann.

In einer vorteilhaften Weiterbildung der Erfindung sind die Magnete als Permanentmagnete ausgeführt, wobei es sich vorzugsweise um im Pulver-Sinterverfahren hergestellte Seltene Erde Dauermagnete handelt.

In einer vorteilhaften Weiterbildung der Erfindung ist die lichtverstärkende Faser mit Erbium-Ionen dotiert. Vorzugsweise beträgt die Länge des dem Magnetfeld ausgesetzten Abschnitts der lichtverstärkenden Faser zwischen 1 m und 100 m, vorzugsweise 10 m, wobei vorzugsweise die gesamte lichtverstärkende Faser dem Magnetfeld ausgesetzt wird.

Die Erfindung wird nun anhand von Ausführungsbeispielen mit Bezug auf die Zeichnung näher beschrieben. Dabei zeigen:
- Figur 1a: eine schematische Darstellung einer Faserverstärkereinrichtung gemäß einem ersten Ausführungsbeispiel,
- Figur 1b: eine schematische Schnittdarstellung entlang der Linie A-A des ersten Ausführungsbeispiels,
- Figur 2a: eine schematische Darstellung eines zweiten Ausführungsbeispiels einer Faserverstärkereinrichtung,
- Figur 2b: eine schematische Schnittdarstellung entlang der Linie A-A des zweiten Ausführungsbeispiels, und
- Figur 3: ein Diagramm, in dem die Dämpfungskurve eines Lichtwellenleiters im Wellenbereich von 1250 nm bis 1650 nm gezeigt ist, wobei auf der Abszisse die Wellenlänge in nm und auf der Ordinate die Dämpfung in dB/km aufgetragen ist.

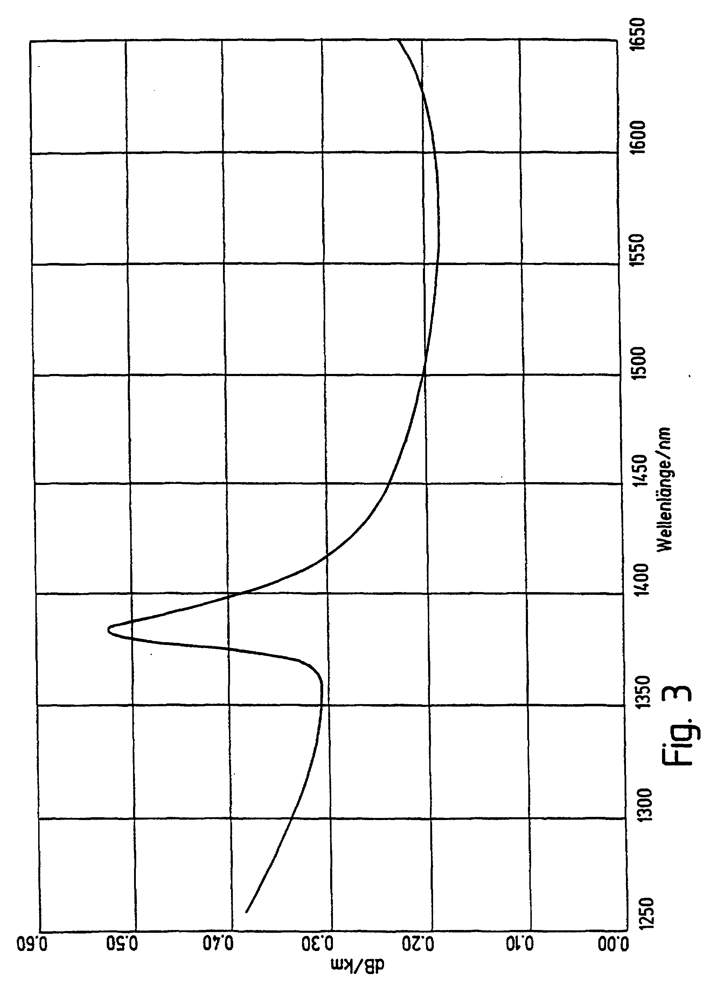

In Figur 3 ist ein Diagramm dargestellt, in dem der spektrale Dämpfungskoeffizient einer sogenannten Standard-Einmodenfaser im Bereich zwischen 1260 nm und 1650 nm aufgetragen ist. Bei dieser Standard-Einmodenfaser handelt es sich um einen Fasertyp, der heute überwiegend in den optischen Nachrichtennetzen eingesetzt wird. In dem Diagramm ist zu erkennen, daß der Dämpfungskoeffizient im Bereich zwischen 1450 nm und 1650 nm mit einem Wert von unter 0,25 dB/km ein Minimum aufweist. Dieser spektrale Bereich von 200 nm eignet sich daher sehr gut für die optische Übertragung. Dieser für die optische Übertragung günstige Bereich läßt sich jedoch mit den bekannten Faserverstärkern, insbesondere mit dem EDFA nicht vollständig ausfüllen. So liegt der Verstärkungsbereich des erwähnten EDFA zwischen 1530 nm und 1560 nm, bei einer Doppeldotierung zwischen 1530 nm und 1570 nm. Mit Hilfe des EDFA läßt sich mithin also nur 1/5 der möglichen Bandbreite ausfüllen.

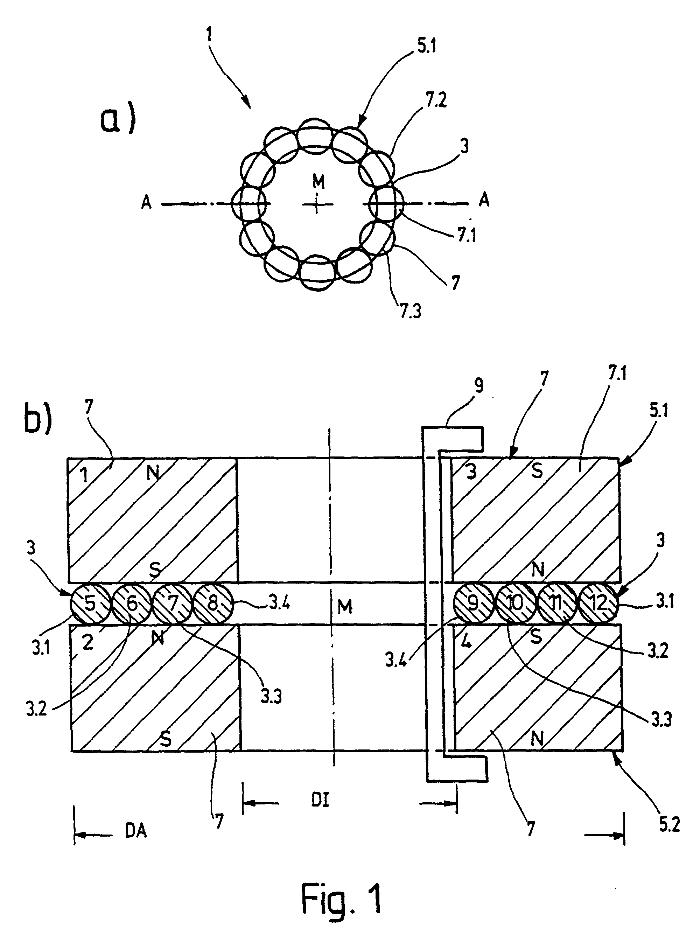

Eine Verbreiterung des Verstärkungsbereichs ist mit Hilfe einer in Figur 1a schematisch dargestellten Faserverstärkereinrichtung 1 möglich. Diese Faserverstärkereinrichtung 1 basiert im wesentlichen auf dem bekannten EDFA, wie er beispielsweise in dem Buch "Optische Telekommunikationssysteme", Dr.rer.nat. Hagen Hultsch, Damm-Verlag KG Gelsenkirchen unter Kapitel 4.5.1 veröffentlicht ist. Der Kern eines solchen Paserverstärkers ist in einer lichtleitenden Faser zu sehen, die mit Seltene Erde Ionen, hier insbesondere Erbium-Ionen dotiert ist. Die Verstärkung der durchlaufenden Lichtenergie erfolgt durch induzierte Emission, die durch optisches Pumpen mit Hilfe eines Lasers bewirkt wird. Die Wellenlänge des Laserlichts ist dabei geringer als jene des durchlaufenden Lichts. Auf eine genauere Beschreibung der Wirkungsweise eines solchen EDFA wird verzichtet, vielmehr wird auf die oben genannte Literaturstelle verwiesen.

Die in Figur 1a in Draufsicht dargestellte Faserverstärkereinrichtung 1 umfaßt eine lichtverstärkende Faser 3 (im folgenden kurz LV-Faser genannt), die rein schematisch als Ring dargestellt ist. Die LV-Faser selbst besteht beispielsweise aus einem Quarzglas oder einem Fluoridglas, das mit Seltene Erde Ionen, im vorliegenden Ausführungsbeispiel Erbium dotiert ist. Der Durchmesser dieser LV-Faser beträgt einschließlich einer Kunststoff-Primärbeschichtung etwa 0,25 mm. Die typische Lange der LV-Faser 3 liegt zwischen einigen und einigen zehn Metern.

Wie aus der Figur 1b ersichtlich, ist die LV-Faser 3 um einen gedachten Mittelpunkt M spiralförmig in einer Ebene liegend angeordnet. Im vorliegenden Ausführungsbeispiel ist die LV-Faser 3 viermal um die Mitte gewunden. Damit ergeben sich gemäß Schnitt A-A links und rechts von der Mitte M jeweils vier Fasern 3.1 bis 3.4. Selbstverständlich kann die Anzahl der Windungen auch andere Werte annehmen.

Die Faserverstärkereinrichtung 1 umfaßt des weiteren zwei Magnetvorrichtungen 5.1 und 5.2, die parallel und beabstandet zueinander angeordnet sind. Wie aus Figur 1b ersichtlich, ist der Abstand zwischen den beiden Magnetvorrichtungen 5.1, 5.2 so gewählt, daß die LV-Faser 3 zwischen diesen aufgenommen werden kann. Das heißt, daß der Abstand zwischen beiden Magnetvorrichtungen 5.1 und 5.2 zumindest dem Außendurchmesser der LV-Faser 3 entspricht.

Beide Magnetvorrichtungen 5.1 und 5.2 umfassen eine Vielzahl von einzelnen Magneten 7, die kreisförmig um die Mitte M angeordnet sind. Bei den Magneten 7 handelt es sich um Permanentmagnete, die zylindrisch ausgebildet sind und deren Längsachse senkrecht zu jener Ebene steht, in der die LV-Faser 3 verläuft. Jeder der Magnete 7 besitzt im vorliegenden Ausführungsbeispiel einen Durchmesser von 15 mm und eine Höhe von 5 mm. Die Anzahl der pro Magnetvorrichtung 5.1, 5.2 verwendeten Magnete 7 hängt von dem gewünschten Durchmesser der Faserverstärkereinrichtung 1 ab, wobei die einzelnen Magnete 7 im wesentlichen ohne Spalt zwischen sich aneinandergereiht werden. Im vorliegenden Ausführungsbeispiel beträgt der Außendurchmesser DA der Verstärkereinrichtung 1 etwa 100 mm, während der Innendurchmesser DI etwa 80 mm beträgt. Selbstverständlich lassen sich diese Werte an die jeweiligen Gegebenheiten anpassen.

Die Magnete 7 der beiden Magnetvorrichtungen 5.1 und 5.2 sind so angeordnet, daß jeweils einer der beiden Pole N, S der LV-Faser 3 zugewandt ist. Des weiteren wechseln sich -in Längsrichtung der LV-Faser gesehen- die Pole N, S innerhalb einer Magnetvorrichtung 5.1, 5.2 ab. Das heißt, daß beispielsweise der N-Pol des Magnets 7.1 zu der LV-Faser 3 zeigt, während die N-Pole der beiden benachbarten Magnete 7.2 und 7.3 nach oben, also weg von der LV-Faser 3 zeigen.

Die Magnetvorrichtung 5.2 ist identisch zu der Magnetvorrichtung 5.1 aufgebaut, wobei die Ausrichtung zu der gegenüberliegenden Magnetvorrichtung 5.1 so erfolgt, daß sich jeweils N- und S-Pol gegenüberliegen, wie dies in Figur 1b dargestellt ist.

Bei den Magneten 7 handelt es sich um beispielsweise im pulvermetallurgischen Sinterverfahren hergestellte extrem starke Permanentmagnete, mit denen in einem zwischen den beiden Magnetvorrichtungen 5.1 und 5.2 gebildeten Luftspalt von unter 0,3 mm magnetische Induktionen von der Größenordnung von Tesla erreichbar sind. Als Magnete kommen beispielsweise aus Neodym-Eisen-Bor oder aus Samarium-Kobalt bestehende Magnete in Frage. Selbstverständlich sind auch andere Magnete denkbar, sofern sie eine entsprechend hohe magnetische Induktion gewährleisten. Selbstverständlich kann auch von der in Figur 1b gezeigten zylindrischen Form der Magnete 7 abgewichen werden. So könnten die Magnete 7 beispielsweise auch die Form von Kreissegmenten oder Ringsegmenten besitzen.

Bei dem angegebenen Außendurchmesser DA von 100 mm, einem inneren Durchmesser DI von 80 mm und einem Außendurchmesser von 0,25 mm der LV-Faser 3, lassen sich in einer Ebene und auf engem Raum ca. 11 m Faser auslegen.

Die magnetische Induktion der Magnetvorrichtungen 5.1, 5.2 läßt sich annähernd verdoppeln, wenn die beiden außenliegenden Pole der sich gegenüberliegenden Magnete 7 mittels einer schematisch dargestellten aus einem magnetischen Material bestehenden Brücke 9 verbunden und damit kurzgeschlossen werden. Als Material für eine solche Brücke 9 eignet sich beispielsweise Eisen.

Die Ausrichtung der einzelnen Magnete 7 innerhalb der Magnetvorrichtungen 5.1, 5.2 derart, daß die Polung wechselt, hat den Vorteil, daß aufgrund inhomogener Magnetfelder eine gleichmäßige Verbreiterung der Energieniveaus des Erbiums erreicht wird. Selbstverständlich ist es auch denkbar, die Magnete 7 einer Magnetvorrichtung 5.1, 5.2 so auszurichten, daß ihre Polung gleich ist, das heißt die der LV-Faser zugewandten Pole einer Magnetvorrichtung sind gleich.

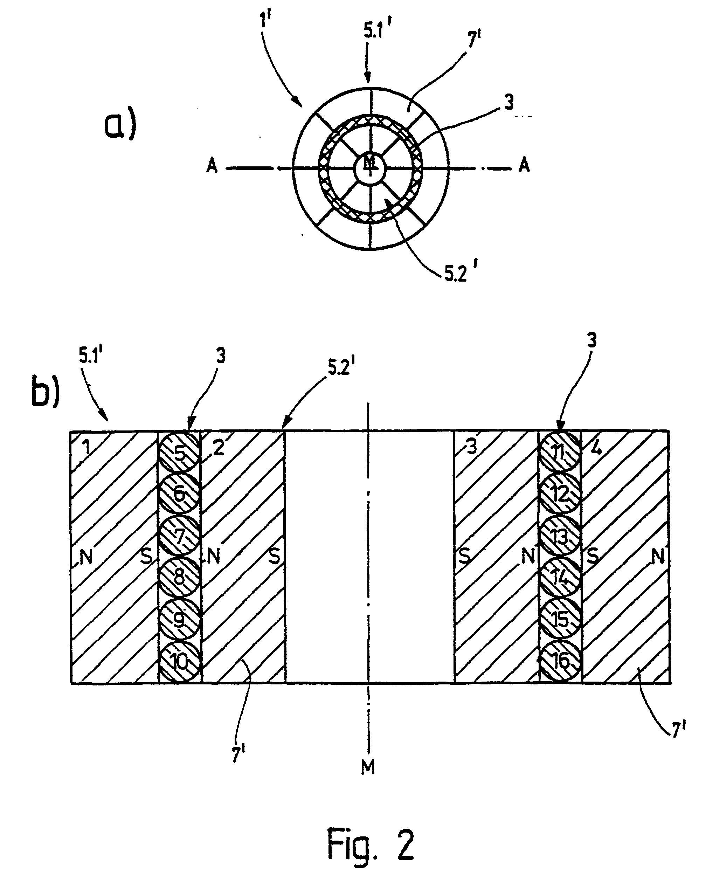

In Figur 2 ist ein weiteres Ausführungsbeispiel einer Faserverstärkereinrichtung 1' dargestellt.

Diese Faserverstärkereinrichtung 1' unterscheidet sich nur unwesentlich von der bereits beschriebenen Faserverstärkereinrichtung 1, so daß auf eine nochmalige Beschreibung der mit gleichen Bezugszeichen gekennzeichneten Teile verzichtet wird.

Wie aus der Schnittdarstellung in Figur 2b ersichtlich, ist die LV-Faser spulenförmig um die Mittelachse M angeordnet, wobei die LV-Faser 3 jedoch nicht in einer Ebene liegt, wie dies im ersten Ausführungsbeispiel der Fall ist. Vielmehr ist die LV-Faser auf einer zylindrisch ausgebildeten Magnetvorrichtung 5.2' aufgewickelt. Koaxial zu dieser Magnetvorrichtung 5.2' liegt die ebenfalls zylindrische Magnetvorrichtung 5.1', deren Innendurchmesser um einen Betrag größer als der Außendurchmesser der inneren Magnetvorrichtung 5.2' gewählt ist, der in etwa dem Durchmesser der LV-Faser 3 entspricht. Die LV-Faser 3 liegt also im vorliegenden Ausführungsbeispiel zwischen den beiden Magnetvorrichtungen 5.1' und 5.2'.

Beide Magnetvorrichtungen 5.1' und 5.2' umfassen ebenfalls als Permanentmagnete ausgebildete Magnete 7', wobei die Magnete 7' der inneren Magnetvorrichtung 5.2' und der äußeren Magnetvorrichtung 5.1' zylindersegmentförmig ausgebildet sind und aneinandergereiht einen Zylinder bilden. Im Gegensatz zu dem ersten Ausführungsbeispiel sind die Magnete 7' einer Magnetvorrichtung 5.1' beziehungsweise 5.2' so ausgerichtet, daß die Polung gleich ist. Das heißt, daß im vorliegenden Ausführungsbeispiel die N-Pole der Magnete 7' der inneren Magnetvorrichtung 5.2' der LV-Faser 3 zugewandt sind. Entsprechend sind die S-Pole der Magnete 7' der äußeren Magnetvorrichtung 5.1' der LV-Faser 3 zugewandt.

Bei einem Außendurchmesser der inneren Magnetvorrichtung 5.2' von 50 mm und insgesamt 200 Windungen der LV-Faser um die Achse M ergibt sich eine Länge der LV-Faser von 31 m. Der Außendurchmesser der gesamten Verstärkereinrichtung 1' liegt bei diesem Ausführungsbeispiel im Bereich von 60 mm, so daß eine Einheit erzielt wird, die relativ kleine Dimensionen aufweist.

Selbstverständlich lassen sich die Magnete 7', wie bereits im Zusammenhang mit dem ersten Ausführungsbeispiel beschrieben, so anordnen, daß sich ihre Pole -in Längsrichtung der LV-Faser gesehen- abwechseln.

Der Vorteil der beschriebenen Faserverstärkereinrichtungen 1 und 1' liegt darin, daß durch das starke magnetische Feld (magnetische Induktion > 0,1 Tesla) bedingt durch den Zeeman-Effekt eine Erweiterung der Verstärkungsbandbreite erzielbar ist.

Statt der in den beiden Ausführungsbeispielen beschriebenen Erbium-Dotierung ist selbstverständlich jede andere Dotierung mit einem Seltene Erde Element denkbar. Vorteilhaft sind auch Doppelt- oder Mehrfachdotierungen mit unterschiedlichen Seltene Erde und anderen Elementen.

## Patentansprüche

1. Faserverstärkereinrichtung (1, 1') für ein optisches System, vorzugsweise ein optisches Datenübertragungssystem, mit einer lichtverstärkenden Faser (3), die zumindest mit Seltene Erde Ionen dotiert ist, und mit einer Magnetvorrichtung (5.1, 5.2, 5.1', 5.2'), in deren Magnetfeld zumindest ein Abschnitt der lichtverstärkenden Faser (3) angeordnet ist, wobei die lichtverstärkende Faser (3) in der Lage ist, ein Wellenlängenmultiplex-Signal zu tragen, **dadurch gekennzeichnet, daß** zur Erweiterung der Breite des zu verstärkenden Wellenlängenbereichs der Faserverstärkereinrichtung (1,1') eine Magnetvorrichtung (5.1, 5.2, 5.1', 5.2') mit Permanentmagneten (7, 7.1, 7') vorgesehen ist.

2. Faserverstärkereinrichtung nach Anspruch 1, **dadurch gekennzeichnet, daß** die auf die lichtverstärkende Faser (3) wirkende magnetische Induktion größer als 0,1, vorzugsweise größer als 1 Tesla ist.

3. Faserverstärkereinrichtung nach Anspruch 1 oder 2, **dadurch gekennzeichnet, daß** eine Magnetvorrichtungen (5.1, 5.2, 5.1', 5.2') zumindest zwei Magnete (7, 7.1, 7') aufweist, wobei benachbarte Magnete (7, 7.1, 7') gleich gepolt sind.

4. Faserverstärkereinrichtung nach Anspruch 1 oder 2, **dadurch gekennzeichnet, daß** eine Magnetvorrichtung (5.1, 5.2, 5.1', 5.2') zumindest zwei Magnete (7, 7.1, 7') aufweist, wobei benachbarte Magnete (7, 7.1, 7') unterschiedlich gepolt sind.

5. Faserverstärker nach einem der Ansprüche 3 oder 4, **dadurch gekennzeichnet, daß** zwei Magnetvorrichtungen (5.1, 5.2, 5.1', 5.2') vorgesehen sind, und daß die Magnete (7, 7.1, 7') beider Magnetvorrichtungen (5.1, 5.2, 5.1', 5.2') in jeweils einer Ebene angeordnet sind, wobei die Längsachsen der Magnete (7, 7.1, 7') jeweils senkrecht zur jeweiligen Ebene liegen.

6. Faseverstärker nach Anspruch 5, **dadurch gekennzeichnet, daß** die Magnete (7, 7.1, 7') jeder Magnetvorrichtung (5.1, 5.2, 5.1', 5.2') auf dem Umfang eines Kreises angeordnet sind.

7. Faserverstärkereinrichtung nach Anspruch 5 oder 6, **dadurch gekennzeichnet, daß** die Ebenen, in denen die beiden Magnetvorrichtungen (5.1, 5.2, 5.1', 5.2') angeordnet sind parallel und mit Abstand zueinander liegen, wobei sich jeweils unterschiedliche Pole gegenüberliegender Magnete (7, 7.1, 7') der beiden Magnetvorrichtungen (5.1, 5.2, 5.1', 5.2') gegenüberstehen.

8. Faserverstärkereinrichtung nach Anspruch 7, **dadurch gekennzeichnet, daß** die lichtverstärkende Faser (3) zwischen den Ebenen spiralförmig angeordnet ist.

9. Faserverstärkereinrichtung nach Anspruch 7 oder 8, **dadurch gekennzeichnet, daß** der Abstand gegenüberliegender Magnete (7, 7.1, 7') kleiner oder gleich 0,3 mm ist.

10. Faserverstärkereinrichtung nach einem der Ansprüche 1 bis 4, **dadurch gekennzeichnet, daß** die Magnetvorrichtung (5.1', 5.2') einen inneren magnetisierten Zylinder und einen äußeren magnetisierten Zylinder aufweist, die koaxial zueinander angeordnet sind, wobei beide Zylinder einen Spalt zwischen sich definieren, und daß die lichtverstärkende Faser (3) in diesem Spalt verläuft.

11. Faserverstärkereinrichtung nach Anspruch 10, **dadurch gekennzeichnet, daß** zumindest einer der beiden Zylinder aus Teilsegmenten aufgebaut ist.

12. Faserverstärkereinrichtung nach einem der vorhergehenden Ansprüche, **dadurch gekennzeichnet, daß** die der lichtverstärkenden Faser (3) abgewandten Pole der Magnetvorrichtung (5.1, 5.2, 5.1', 5.2') mittels eines magnetisierbaren Materials miteinander verbunden sind.

13. Faserverstärkereinrichtung nach einem der vorhergehenden Ansprüche, **dadurch gekennzeichnet, daß** die Permanentmagnete (7, 7.1, 7') als in einem Pulver-Sinterverfahren hergestellte Seltene Erde Dauermagnete ausgeführt sind.

14. Faserverstärkereinrichtung nach einem der vorhergehenden Ansprüche, **dadurch gekennzeichnet, daß** die lichtverstärkende Faser (3) mit Erbium Ionen dotiert ist.

15. Faserverstärkereinrichtung nach einem der vorhergehenden Ansprüche, **dadurch gekennzeichnet, daß** der Abschnitt der lichtverstärkenden Faser (3) eine Länge zwischen 1 m und 100 m hat.

16. Faserverstärkereinrichtung nach einem der vorhergehenden Ansprüche, **dadurch gekennzeichnet, daß** die Länge des Abschnitts der gesamten Länge der lichtverstärkenden Faser (3) entspricht.

## Claims

1. Fibre-amplifier apparatus (1, 1') for an optical system, preferably an optical data-transmission system, with a light-amplifying fibre (3) doped at least with rare-earth ions, and with a magnet device (5.1, 5.2, 5.1', 5.2') in the magnetic field of which is disposed at least one section of the light-amplifying fibre (3), the light-amplifying fibre (3) being capable of carrying a wavelength multiplex signal, **characterized in that** a magnet device (5.1, 5.2, 5.1', 5.2') with permanent magnets (7, 7.1, 7') is provided in order to extend the width of the wavelength range to be amplified of the fibre-amplifier apparatus (1, 1').

2. Fibre-amplifier apparatus according to claim 1, **characterized in that** the magnetic induction acting on the light-amplifying fibre (3) is greater than 0.1, preferably greater than 1 tesla.

3. Fibre-amplifier apparatus according to claim 1 or 2, **characterized in that** a magnet device (5.1, 5.2, 5.1', 5.2') comprises at least two magnets (7, 7.1, 7'), the polarities of adjacent magnets (7, 7.1. 7') being identical.

4. Fibre-amplifier apparatus according to claim 1 or 2, **characterized in that** a magnet device (5.1, 5.2, 5.1', 5.2') comprises at least two magnets (7, 7.1, 7'), the polarities of adjacent magnets (7, 7.1, 7') being different.

5. Fibre amplifier according to any one of claims 3 or 4, **characterized in that** two magnet devices (5.1, 5.2, 5.1', 5.2') are provided and the magnets (7, 7.1, 7') of both magnet devices (5.1, 5.2, 5.1', 5.2') are each disposed in a plane, the longitudinal axes of the magnets (7, 7.1, 7') each lying perpendicular to the respective plane.

6. Fibre amplifier according to claim 5, **characterized in that** the magnets (7, 7.1, 7') of each magnet device (5.1, 5.2, 5.1', 5.2') are disposed on the circumference of a circle.

7. Fibre-amplifier apparatus according to claim 5 or 6, **characterized in that** the planes in which the two magnet devices (5.1, 5.2, 5.1', 5.2') are disposed are parallel to and at a distance from each other, wherein different poles of opposing magnets (7, 7.1, 7') of the two magnet devices (5.1, 5.2, 5.1', 5.2') are opposite each other.

8. Fibre-amplifier apparatus according to claim 7, **characterized in that** the light-amplifying fibre (3) is disposed in spiral manner between the planes.

9. Fibre-amplifier apparatus according to claim 7 or 8, **characterized in that** the distance between opposing magnets (7, 7.1, 7') is less than or equal to 0.3 mm.

10. Fibre-amplifier apparatus according to any one of claims 1 to 4, **characterized in that** the magnet device (5.1', 5.2') comprises an inner magnetized cylinder and an outer magnetized cylinder, which cylinders are disposed coaxially with respect to each other, both cylinders defining a gap between them, wherein the light-amplifying fibre (3) extends in said gap.

11. Fibre-amplifier apparatus according to claim 10, **characterized in that** at least one of the two cylinders is constructed of partial segments.

12. Fibre-amplifier apparatus according to any one of the preceding claims, **characterized in that** the poles of the magnet device (5.1, 5.2, 5.1', 5.2') facing away from the light-amplifying fibre (3) are joined together by means of a magnetizable material.

13. Fibre-amplifier apparatus according to any one of the preceding claims, **characterized in that** the permanent magnets (7, 7.1, 7') are in the form of rare-earth permanent magnets produced by a powder-sintering process.

14. Fibre-amplifier apparatus according to any one of the preceding claims, **characterized in that** the light-amplifying fibre (3) is doped with erbium ions.

15. Fibre-amplifier apparatus according to any one of the preceding claims, **characterized in that** the section of the light-amplifying fibre (3) has a length between 1 m and 100 m.

16. Fibre-amplifier apparatus according to any one of the preceding claims, **characterized in that** the length of the section is equivalent to the total length of the light-amplifying fibre (3).

## Revendications

1. Dispositif d'amplificateur à fibre (1, 1') pour un système optique, de préférence un système optique de transmission de données, avec une fibre amplificatrice de lumière (3), dotée au moins d'ions de terres rares, et avec un dispositif d'aimants (5.1, 5.2, 5.1', 5,2'), dans le champ magnétique duquel est disposé au moins un segment de la fibre amplificatrice de lumière (3), la fibre amplificatrice de lumière (3) étant capable de transporter un signal multiplexé en longueur d'onde, **caractérisé en ce qu'**il est prévu, pour étendre la largeur de la bande de longueur d'onde du Dispositif d'amplificateur à fibre à amplifier (1, 1'), un dispositif d'aimants (5.1, 5.2, 5.1', 5,2') à aimants permanents (7, 7.1, 7').

2. Dispositif d'amplificateur à fibre selon la revendication 1, **caractérisé en ce que** l'induction magnétique agissant sur la fibre amplificatrice de lumière (3) est supérieure à 0,1 tesla et de préférence supérieure à 1 tesla.

3. Dispositif d'amplificateur à fibre selon la revendication 1 ou 2, **caractérisé en ce qu'**un dispositif d'aimants (5.1, 5.2, 5.1', 5,2') compte au moins deux aimants (7, 7.1, 7'), les aimants voisins (7, 7.1, 7') ayant la même polarité.

4. Dispositif d'amplificateur à fibre selon la revendication 1 ou 2, **caractérisé en ce qu'**un dispositif d'aimants (5.1, 5.2, 5.1', 5,2') compte au moins deux aimants (7, 7.1, 7'), les aimants voisins (7, 7.1, 7') ayant une polarité différente.

5. Amplificateur à fibre selon la revendication 3 ou 4, **caractérisé en ce que** deux dispositifs d'aimants (5.1, 5.2, 5.1', 5,2') sont prévus et que les aimants (7, 7.1, 7') des deux dispositifs d'aimants (5.1, 5.2, 5.1', 5,2') sont disposés chacun à un niveau, l'axe longitudinal des aimants (7, 7.1, 7') étant placé perpendiculairement à chaque niveau.

6. Amplificateur à fibre selon la revendication 5, **caractérisé en ce que** les aimants (7, 7.1, 7') de chaque dispositif d'aimants (5.1, 5.2, 5.1', 5,2') sont disposés sur le périmètre d'un cercle.

7. Dispositif d'amplificateur à fibre selon la revendication 1 ou 2, **caractérisé en ce que** les niveaux sur lesquels sont placés les dispositifs d'aimants (5.1, 5.2, 5.1', 5,2') sont parallèles et espacés les uns des autres, les aimants (7, 7.1, 7') de chaque dispositif d'aimants (5.1, 5.2, 5.1', 5,2') étant placés face à un aimant de polarité inverse.

8. Dispositif d'amplificateur à fibre selon la revendication 7, **caractérisé en ce que** la fibre amplificatrice de lumière (3) est disposée en spirale entre les niveaux.

9. Dispositif d'amplificateur à fibre selon la revendication 7 ou 8, **caractérisé en ce que** l'espacement entre les aimants (7, 7.1, 7') placés en face les uns des autres est inférieur ou égal à 0,3 mm.

10. Dispositif d'amplificateur à fibre selon l'une quelconque des revendications 1 à 4, **caractérisé en ce que** le dispositif d'aimants (5.1', 5,2') comporte un cylindre magnétisé intérieur et un cylindre magnétisé extérieur, disposés de manière coaxiale l'un par rapport à l'autre, les deux cylindres définissant un interstice entre eux et que la fibre amplificatrice de lumière (3) passe dans cet interstice.

11. Dispositif d'amplificateur à fibre selon la revendication 10, **caractérisé en ce qu'**au moins un des deux cylindres est composé de sous-éléments.

12. Dispositif d'amplificateur à fibre selon l'une quelconque des revendications ci-dessus, **caractérisé en ce que** les pôles du dispositif d'aimants (5.1, 5.2, 5.1', 5,2') opposés à la fibre amplificatrice de lumière (3) sont reliés les uns aux autres au moyen d'un matériau magnétisable.

13. Dispositif d'amplificateur à fibre selon l'une quelconque des revendications ci-dessus, **caractérisé en ce que** les aimants permanents (7, 7.1, 7') sont des aimants permanents terres rares fabriqués selon une technique de frittage de poudre.

14. Dispositif d'amplificateur à fibre selon l'une quelconque des revendications ci-dessus, **caractérisé en ce que** la fibre amplificatrice de lumière (3) est dotée d'ions d'erbium.

15. Dispositif d'amplificateur à fibre selon l'une quelconque des revendications ci-dessus, **caractérisé en ce que** le segment de la fibre amplificatrice de lumière (3) a une longueur comprise entre 1m et 100m.

16. Dispositif d'amplificateur à fibre selon l'une quelconque des revendications ci-dessus, **caractérisé en ce que** la longueur du segment correspond à la longueur totale de la fibre amplificatrice de lumière (3).
